# EUROPEAN PATENT SPECIFICATION

(11) **EP 0 445 872 B1**
(45) Date of publication and mention of the grant of the patent: **11.12.1996**
(21) Application number: 91200435.5
(22) Date of filing: 01.03.1991
(51) Int. Cl.: D02G 3/12

(54) **Composite yarn with high cut resistance and articles comprising said composite yarn**
Verbundgarn mit hoher Reissfestigkeit und Artikel, die das genannte Garn enthalten
Fil composite à haute résistance aux coupures et articles comprenant ce fil composite

(30) Priority: 05.03.1990 FR 9002730
(43) Date of publication of application: 11.09.1991
(73) Proprietor: STAMICARBON B.V., NL-6167 AC Geleen (NL); S.A. SCHAPPE, F-01800 Meximieux (FR)
(72) Inventor: Bontemps, Guy, F-01970 Tenay (FR); Guevel, Jean, F-01440 Viriat (FR); François, Marc, F-69260 Charbonnières les Bains (FR); Kriele, Johannes Elisabeth Adrianus, NL-4645 JJ Putte (NL)

(56) References cited:
- WO-A-80/00069
- DE-A- 1 560 228
- DE-A- 2 111 780
- FR-A- 2 276 409
- GB-A- 2 018 323

## Description

The invention relates to a composite yarn for the manufacture of cut resistant articles having a cut-resistance of at least 10 units according to the French standard NF S75-001, which comprises at least one strand of wire and at least one fiber yarn. Such a composite yarn is known from GB-A-2,018,323. The known composite yarn has a longitudinal core comprising at least one strand of wire and two or more fiber yarns wrapped around said longitudinal core.

Such a composite yarn is also known from US 4.777.789.

Composite yarns with high cut resistance are used in, for example, garments intended to protect persons working in the meat industry, the metal industry or in the wood industry from being cut. Examples of such garments are gloves, aprons, trousers, cuffs, etc.

A disadvantage of the known cut-resistant composite yarn is that it is not very flexible. Because of this, garments comprising the composite yarn are not very comfortable and greatly obstruct the wearer in his activities.

The invention provides a composite yarn that presents this disadvantage to a considerably reduced extent.

This is achieved because in the composite yarn according to the invention the fiber yarn is a spun yarn comprising at least staple fibres of a polyolefin with a weight average molecular weight of at least 600,000 g/mole and in that the composite yarn is twisted. An additional advantage of the composite yarn according to the invention is that it can be produced in a simpler manner than the known composite yarn. Another additional advantage of the composite yarn according to the invention is that its cut resistance is retained at a high level after prolonged use or after frequent washing of an article comprising the composite yarn. In DE-A-1,560,228 a composite yarn is described having a spiraltwist structure i.e. a longitudinal strand and a strand spirally wound around the longitudinal strand. This composite yarn is for use as a tyrecord. Nothing is disclosed about the cut resistance of said composite yarn.

Preferably, linear polyethylene is used as polyolefin for the staple fibres of the spun yarn. Linear polyethylene is here understood to be polyethylene with less than 1 side chain per 100 C atoms and preferably with less than 1 side chain per 300 C atoms, which polyethylene may moreover contain up to 5 mol.% of one or more other copolymerisable olefins such as propylene, butylene, pentene, 4-methylpentene, octene.

Other polyolefins may also be considered, for example polypropylene homo- and copolymers. In addition, the polyolefins used may contain small amounts of one or more other polymers, in particular alkene-1-polymers. Good results can be obtained if the staple fibres are produced by producing filaments by means of gel spinning and reducing said filaments. The gel spinning process is described in, for example, GB-A-2.042.414 and GB-A-2.051.667. In principle, this process consists in preparing a solution of the polyolefin, shaping the solution into filaments at a temperature above the dissolution temperature of the polyolefin, cooling the filaments to below the dissolution temperature to effect gelling, and stretching the filaments and simultaneously removing the solvent. The filaments thus obtained can be reduced to staple fibres with the aid of the known processes. The length of the staple fibres is for example between 1 and 300 mm.

Staple fibres that are very suitable for the composite yarn according to the invention are obtained if the filaments are reduced by means of stretch breaking. The stretch breaking process is described in, for example, G.R. Wray, Modern composite yarn Production, Columbine Press, Manchester & London, 1960.

Equipment suitable for stretch breaking is per example supplied by Seydel in Germany.

The principle of the stretch breaking process is that a bundle of filaments is successively passed between a first and a second pair of rollers, the second of which rotates at a higher speed than the first, so that the filaments are stretched to breaking point. In this manner a bundle of staple fibres is formed from the bundle of filaments. The length of the staple fibres in the bundle varies. Good results can be obtained if the staple fibres thus obtained have an average length of between 40 mm and 180 mm, preferably between 60 mm and 140 mm, more preferably between 110 mm and 130 mm. The staple fibres obtained with the aid of the known processes and by means of stretch breaking can be spun into a spun yarn. A spun yarn suitable for the invention can have a thickness of between 6.25 and 1000 Tex (expressed in metric number between M.n. 1 and M.n. 160).

Good results also can be obtained if the staple fibres are mixed with other staple fibres with the aid of the known methods and the mixture of the staple fibres and the other staple fibres is spun into a spun yarn. The other staple fibres may be natural, artificial or synthetic staple fibres. Natural staple fibres are here understood to be naturally occurring staple fibres such as cotton, wool, silk, jute, linen and the like. Artificial staple fibres are here understood to be staple fibres produced from natural polymers, whether or not modified, such as rayon, which is produced from cellulose. Synthetic staple fibres are here understood to be staple fibres produced from a synthetic polymer, such as aramide staple fibres, polyester staple fibres, polypropylene staple fibres. Preferably, polyamide staple fibres are used in the yarn according to the invention.

Of course, if the other staple fibres are not available as such, said staple fibres may be produced from filaments by reducing said filaments with the aid of the known methods or by means of stretch breaking.

The strand of wire may comprise any suitable metal, such as aluminium, copper, bronze, steel and the like. Preferably, use is made of an annealed, stainless steel wire with a thickness of between 0.060 mm and 0.160 mm, preferably between 0.080 and 0.140 mm. The composite yarn is produced by twisting the strands with the aid of the known methods.

A composite yarn that is very suitable for the invention consists of one strand of annealed stainless steel wire and two spun yarns.

Preferably, the composite yarn is twisted between 2 and 6 times per linear cm, more preferably between 3.5 and 4.5 times per linear cm.

The invention also relates to articles comprising the composite yarn with high cut resistance according to the invention.

The articles can be made by weaving, plaiting or knitting the composite yarn, if so desired in combination with one or more other yarns.

The composite yarn may be used in protective garments such as gloves, aprons, trousers, cuffs and the like. Such garments may be worn by, for example, persons working in the meat industry, the metal industry or in the wood industry. The composite yarn may also be used in vandal-proof articles such as seats in train compartments. In addition, the composite yarn may be used in hosing or in hose coverings, for example fire-hoses.

The invention is further illustrated with reference to the example, without being limited thereto.

### Example

A 178 tex (1600 denier) Dyneema^{R} SK 60 filament yarn was reduced to a bundle of staple fibres by means of stretch breaking, with the aid of Seydel^{R} equipment. Dyneema^{R} SK 60 is a strong polyethylene fibre, produced by means of gel spinning, which is supplied by DSM HPF in the Netherlands. The average length of the staple fibres was 120 mm.

In the same manner a 100 KTex polyamide filament yarn supplied by Rhône Poulenc, was reduced to a bundle of staple fibres with an average length of 120 mm.

The bundles of staple fibres thus obtained were mixed using Schlumberger^{R} equipment type NSC and were spun into a yarn with the aid of Comelor^{R} equipment of the long staple fiber type. The polyethylene/polyamide volumetric ratio of the staple fibres in the yarn was 50/50.

With the aid of Hamel^{R} equipment of the two passages type, a composite yarn with high cut resistance was twisted from two of the aforementioned yarns and one strand of Inox 18/10 wire. Inox 18/10 is an annealed stainless steel wire with a thickness of 0.080 mm, which is supplied by Sassenscheidt (RFA).

The composite yarn comprised 3.9 twists/cm. A glove was knitted from the composite yarn, using Shima^{R} equipment, into a circular knit construction. The glove was very flexible and very comfortable.

The cut resistance of the glove was determined by the Institut Textile de France at Lyons according to the NF S75 - 001 standard.

The cut resistance was determined before and after abrasion. The abrasion was effected with the aid of the usomètre Lhomargy, using the abrasive P400, which was replaced every 1000 cycles. The weight used was 500 g.

A sample measuring 10 x 6 cm was taken from the palm of the glove. The maximum cutting speed was 10 cm/s. The knife was pressed against the sample with a normal force of 5 N.

The result obtained before abrasion of the glove was 20.4 (the average of 5 tests) units according to standard NF S75 - 001 and after abrasion 17.5 (average of 5 tests) units.

To be admitted to the highest class (class 4) of cut-resistant articles, an article must yield a result of > 10 units. It is clear that the glove comprising the composite yarn according to the invention amply meets this requirement.

A comparative test was carried out using a number of the commercially most successful gloves. Only one other glove yielded a higher cut resistance value before abrasion than the glove according to the invention. However, this glove was less flexible and also comprised a composite yarn that is to be produced in a more complex manner than the composite yarn according to the invention. After abrasion the cut resistance value obtained with the glove according to the invention was higher than that obtained with the aforementioned glove.

## Claims

1. Composite yarn for the manufacture of cut-resistant articles having a cut-resistance of at least 10 units according to the French standard NF S75-001, which comprises at least one strand of wire and at least one fiber yarn, characterised in that the fiber yarn is a spun yarn comprising at least staple fibers of a polyolefin with a weight average molecular weight of at least 600,000 g/mole and in that the composite yarn is twisted.

2. Composite yarn according to claim 1, characterized in that linear polyethylene is used as polyolefin.

3. Composite yarn according to claim 1 or 2, characterized in that the staple fibres are reduced filaments which filaments are obtained by means of the gel spinning process.

4. Composite yarn according to any one of claims 1-3, characterized in that the spun yarn contains other staple fibres.

5. Composite yarn according to claim 4, characterized in that the other staple fibres are polyamide fibres.

6. Composite yarn according to any one of claims 1-5, characterized in that the staple fibres are obtained by reducing filaments by means of stretch breaking.

7. Composite yarn according to any one of claims 1-6, characterized in that the strand of wire is a strand of annealed stainless steel wire.

8. Composite yarn according to any one of claims 1-7, characterized in that it comprises one strand of wire and two spun yarns.

9. Articles for use in protective garments such as gloves, aprons, trousers, cuffs, in vandal-proof articles such as seats, in hosing or in hose coverings made by weaving, plaiting or knitting the composite yarn according to any one of claims 1-8 optionally in combination with one or more other yarns which articles have a cut-resistance of at least 10 units according to the French standard NF S75-001.

## Patentansprüche

1. Verbundgarn zur Herstellung schnittbeständiger Artikel mit einer Schnittbeständigkeit von zumindest 10 Einheiten gemäß dem französischen Standard NF S75-001, welches zumindest einen Drahtstrang und zumindest ein Fasergarn umfaßt, dadurch gekennzeichnet, daß das Fasergarn ein Spinngarn ist, das zumindest Stapelfasern eines Polyolefins mit einer massenmittleren Molmasse von zumindest 600.000 g/mol umfaßt, und dadurch, daß das Verbundgarn verdrillt ist.

2. Verbundgarn nach Anspruch 1, dadurch gekennzeichnet, daß lineares Polyethylen als Polyolefin verwendet wird.

3. Verbundgarn nach Anspruch 1 oder 2, dadurch gekennzeichnet, daß die Stapelfasern reduzierte Filamente sind, welche Filamente durch das Gelspinnverfahren erhalten werden.

4. Verbundgarn nach einem der Ansprüche 1 bis 3, dadurch gekennzeichnet, daß das Spinngarn andere Stapelfasern enthält.

5. Verbundgarn nach Anspruch 4, dadurch gekennzeichnet, daß die anderen Stapelfasern Polyamid-Fasern sind.

6. Verbundgarn nach einem der Ansprüche 1 bis 5, dadurch gekennzeichnet, daß die Stapelfasern durch die Reduktion von Filamenten durch Reißen erhalten werden.

7. Verbundgarn nach einem der Ansprüche 1 bis 6, dadurch gekennzeichnet, daß der Drahtstrang ein Strang von gehärtetem, rostfreien Stahldraht ist.

8. Verbundgarn nach einem der Ansprüche 1 bis 7, dadurch gekennzeichnet, daß es einen Drahtstrang und zwei Spinngarne umfaßt.

9. Artikel zur Verwendung in Schutzkleidung, wie Handschuhe, Schürzen, Hosen, Manschetten, in zerstörungssicheren Artikeln, wie Sitzen, in Schläuchen oder in Schlauchumhüllungen, welche durch Weben, Flechten oder Stricken des Verbundgarns nach einem der Ansprüche 1 bis 8, gegebenenfalls in Kombination mit einem oder mehreren anderen Garnen, hergestellt werden, welche Artikel eine Schnittbeständigkeit von zumindest 10 Einheiten gemäß dem französischen Standard NF S75-001 aufweisen.

## Revendications

1. Fil composite pour la fabrication d'articles ayant une résistance aux coupures d'au moins 10 unités selon la norme française NF S75-001, qui comprend au moins un toron de fil métallique et au moins un fil fibreux, caractérisé en ce que le fil fibreux est un filé comprenant au moins des fibres discontinues d'une polyoléfine d'une masse molléculaire moyenne en poids d'au moins 600 000 g/mole et en ce que le fil composite est retordu.

2. Fil composite selon la revendication 1, caractérisé en ce que le polyéthylène linéaire est utilisé comme polyoléfine.

3. Fil composite selon la revendication 1 ou 2, caractérisé en ce que les fibres discontinues sont des filaments réduits qu'on obtient par un procédé de filage de gel.

4. Fil composite selon l'une quelconque des revendications 1 à 3, caractérisé en ce que le filé contient d'autres fibres discontinues.

5. Fil composite selon la revendication 4, caractérisé en ce que les autres fibres discontinues sont des fibres de polyamide.

6. Fil composite selon l'une quelconque des revendications 1 à 5, caractérisé en ce qu'on obtient les fibres discontinues en réduisant les filaments par une technique de rupture par étirage.

7. Fil composite selon l'une quelconque des revendications 1 à 6, caractérisé en ce que le toron de fil métallique est un toron de fil d'acier inoxydable recuit.

8. Fil composite selon l'une quelconque des revendications 1 à 7, caractérisé en ce qu'il comprend un toron de fil métallique et deux filés.

9. Articles pour utilisation dans des vêtements de protection tels que des gants, des tabliers, des pantalons, des manchettes, des articles à l'épreuve du vandalisme tels que des sièges, dans des tuyaux, ou des gaines de tuyaux, fabriqués par tissage, nattage ou tricotage du fil composite selon l'une quelconque des revendications 1 à 8, facultativement en comparaison avec ou ou plusieurs autres fils. Ces articles ayant une résistance aux coupures d'au moins 10 unités selon la norme française NF S75-001.
